Europäisches Patentamt

European Patent Office

Office européen des brevets

(19)

(11) EP 0 525 663 B1

(12) **FASCICULE DE BREVET EUROPEEN**

(45) Date de publication et mention
de la délivrance du brevet:
**23.10.1996 Bulletin 1996/43**

(51) Int. Cl.$^6$: **B60K 7/00**, B60K 17/14

(21) Numéro de dépôt: **92112674.4**

(22) Date de dépôt: **24.07.1992**

(54) **Module de roulement moteur, notamment pour véhicule automobile**

Radmodul mit Motor, insbesondere für Kraftfahrzeuge

Wheel unit with motor, especially for vehicles

(84) Etats contractants désignés:
**AT BE CH DE DK ES FR GB IT LI LU NL PT SE**

(30) Priorité: **29.07.1991 FR 9109714**

(43) Date de publication de la demande:
**03.02.1993 Bulletin 1993/05**

(73) Titulaire: **SMH Management Services AG**
**CH-2501 Biel (CH)**

(72) Inventeurs:
• **Brunner, Raphael**
**CH-2502 Bienne (CH)**
• **Müller, Jacques**
**CH-2732 Reconvilier (CH)**

(74) Mandataire: **de Raemy, Jacques et al**
**ICB**
**Ingénieurs Conseils en Brevets SA**
**Rue des Sors 7**
**2074 Marin (CH)**

(56) Documents cités:
**DE-B- 1 227 783**       **US-A- 4 330 045**

• **SOVIET INVENTIONS ILLUSTRATED Section PQ,**
**Week 8420, 27 Juin 1984 Derwent Publications**
**Ltd., London, GB; Class Q13, AN 84-426208**
• **SOVIET INVENTIONS ILLUSTRATED Section PQ,**
**Week 8734, 2 Septembre 1987 Derwent**
**Publications Ltd., London, GB; Class Q13, AN**
**87-241425**

## Description

La présente invention concerne un module de roulement moteur notamment pour véhicule automobile. Plus précisément, elle concerne les ensembles moteurs autonomes qui, dans un véhicule ayant une source d'énergie électrique ou hydraulique, par exemple, reçoivent cette énergie sans conversion centrale en énergie mécanique, chaque module de roulement comprenant son propre moteur alimenté par un câble électrique ou par une canalisation hydraulique raccordé à la source d'énergie par l'intermédiaire d'un dispositif de commande approprié.

Dans ce genre de module, la roue est en général couplée au moteur par une chaîne cinématique rigide n'admettant aucun jeu dans la transmission du couple de rotation, à part les jeux habituels dus aux tolérances d'usinage des pièces. En d'autres termes, les irrégularités de la route, voire les petits obstacles (pierres, discontinuités soudaines dans la surface de roulement) ou les à-coups de freinage ou d'accélération sont transmis immédiatement d'une extrémité à l'autre de la chaîne cinématique (de la roue au moteur ou inversement). Il en résulte une fatigue prématurée des pièces en jeu et par conséquent une plus ou moins rapide usure de celles-ci.

Pour éviter ces difficultés, il est utile de pouvoir admettre dans la chaîne cinématique une différence prédéterminée et temporaire entre le couple d'entrée moteur et le couple utile de sortie dans une mesure telle que la majeure partie des effets de ces différences dynamiques soudaines soit absorbée.

A cet effet, certains modules de roulement moteur connus (SU 1 036 580 et 1 283 122) comprennent un arbre de torsion intercalé entre le moteur et une transmission réductrice en prise avec la roue, pour absorber les différences dynamiques entre le couple de rotation fourni par le moteur, et le couple de rotation auquel est soumise la roue.

Les quelques considérations qui suivent ont pour but de clarifier la notion d'arbre de torsion. Lorsqu'on exerce un couple sur une extrémité d'un arbre quelconque, cet arbre va se tordre. Si une extrémité de l'arbre est maintenue fixe, l'autre extrémité de celui-ci va se tordre d'un certain angle appelé angle de torsion. Pour une portion de section constante d'un arbre, l'angle de torsion produit par l'action d'un couple donné sur cette portion, dépend dans la limite élastique, des trois grandeurs suivantes :

- il est proportionnel à la longueur de ladite portion;
- il est inversement proportionnel au module de rigidité de la matière en laquelle l'arbre a été réalisé;
- il est inversement proportionnel au moment quadratique de la section transversale de ladite portion.

Au vu de ces considérations, nous dirons qu'un arbre de torsion est un arbre conformé pour produire dans la limite élastique, sous l'action d'un couple, un angle de torsion relativement important.

Dans le document SU 1 036 580, en particulier, on décrit un module de roulement moteur comprenant d'une part un moteur, et d'autre part une roue et une transmission réductrice formée par deux engrenages planétaires découplables, en prise directe avec la roue. Entre ces deux parties, est intercalé un arbre de torsion de section uniforme qui est fixé par l'une de ses extrémités à l'arbre du moteur, dans le prolongement de celui-ci. L'autre extrémité de cet arbre de torsion est fixée à un pignon solaire constituant l'organe d'entrée dudit engrenage planétaire. Une telle construction présente l'inconvénient d'être relativement volumineuse et lourde.

L'invention a donc pour but de fournir un module de roulement moteur muni d'un arbre de torsion et qui soit léger et compact, et donc bien adapté notamment pour équiper un véhicule léger et de petites dimensions.

Ainsi, l'invention a pour objet un module de roulement moteur comprenant un moteur, un carter logeant ledit moteur, fermé à une extrémité par un capot et partiellement obturé à l'autre extrémité par un flasque en regard d'un support de roue dont la partie distale, sensiblement cylindrique, reçoit intérieurement un roulement; une roue montée rigidement sur ledit support de roue; une transmission réductrice épicycloïdale en prise directe entre le moteur et la roue, et logée dans ledit support de roue; un arbre principal portant le rotor dudit moteur et le pignon planétaire de ladite transmission; un canon de fixation prolongeant ledit carter du côté de la roue, ledit canon étant coaxial avec ledit arbre principal, recevant extérieurement ledit roulement et étant pourvu à son extrémité d'un filetage de fixation de l'élément de la transmission réductrice fixé par rapport au carter; caractérisé en ce que l'arbre principal est un arbre multifonctionnel unique réalisé d'une seule pièce, le pignon planétaire venant de matière avec l'arbre principal; en ce que l'élément de la transmission réductrice fixé par rapport au carter est le porte-satellites; en ce que l'extrémité libre de ladite partie distale du support de roue est pratiquement en contact avec la face extérieure dudit flasque, la longueur dudit canon de fixation étant sensiblement égale à la distance (d) séparant ledit pignon planétaire de l'extrémité libre de ladite partie arrière; et en ce qu'une portion dudit arbre principal située entre ledit pignon planétaire et ledit rotor, à l'intérieur dudit canon de fixation, a une section dont le moment quadratique par rapport à l'axe dudit arbre, est au moins 10 fois plus petit que le moment quadratique de la section de l'arbre dans les autres parties de celui-ci.

La portion dudit arbre principal qui a une section dont le moment quadratique est considérablement plus petit que le moment de la section de l'arbre dans les autres parties de celui-ci, présente de ce fait, une grande flexibilité en torsion. Cette portion de l'arbre principal peut donc assurer l'absorption des effets dus aux différences dynamiques entre le couple fourni par le moteur et le couple auquel est soumis la roue. De plus, les caractéristiques énumérées ci-dessus quant à l'agencement et à la forme des éléments constituant le module de roulement moteur objet de l'invention, permettent de réaliser des modules remarquablement compacts et légers. En effet, l'utilisation d'un canon de fixation solidaire du carter dont la longueur est égale à la distance séparant, au niveau de l'arbre principal, la transmission réductrice de l'extrémité libre de la partie arrière du plateau porte roue, qui loge ladite transmission réductrice, permet de réaliser des constructions présentant un encombrement extrêmement réduit dans le sens de l'axe de la roue. Finalement, la portion flexible en torsion de l'arbre principal étant logée dans ledit canon de fixation, sa longueur ne contribue pas à la longueur du module de roulement moteur.

Selon une caractéristique avantageuse de l'invention l'arbre principal multifonctionnel unique est réalisé en une seule pièce.

En conséquence, il peut être plus léger et plus compact tout en conservant les mêmes propriétés mécaniques. De plus, le nombre d'opérations nécessaires pour l'assemblage du module de roulement moteur, s'en trouve diminué.

Selon une autre caractéristique avantageuse de l'invention, l'organe d'entrée de la transmission réductrice vient de matière avec l'arbre principal. Dans ces conditions, l'arbre principal peut être réalisé par exemple en la nuance d'acier à engrenages 42CrMo4.

D'autres caractéristiques et avantages de l'invention apparaîtront au cours de la description qui va suivre, donnée uniquement à titre d'exemple et faite en se référant aux dessins annexés, sur lesquels :

- la figure 1 est une vue en coupe partielle verticale d'un module de roulement moteur, notamment pour véhicule automobile et réalisé selon un mode d'exécution préféré de l'invention, la vue étant prise du côté arrière, prenant en compte le sens d'avancement du véhicule;
- la figure 2 est une vue à plus grande échelle par rapport à celle de la figure 1, d'une coupe axiale partielle du module de roulement suivant l'invention;
- la figure 3 est une vue de face partielle du module de roulement selon la flèche III de la figure 2 , le capot protégeant la transmission réductrice étant enlevé;
- la figure 4 est une vue en bout prise selon la flèche IV de la figure 1;
- la figure 5 est une vue en coupe partielle verticale du module moteur suivant l'invention prise du côté avant vu dans le sens d'avancement du module moteur;
- la figure 6 montre un autre mode de réalisation de l'invention par une vue analogue à celle de la figure 2.

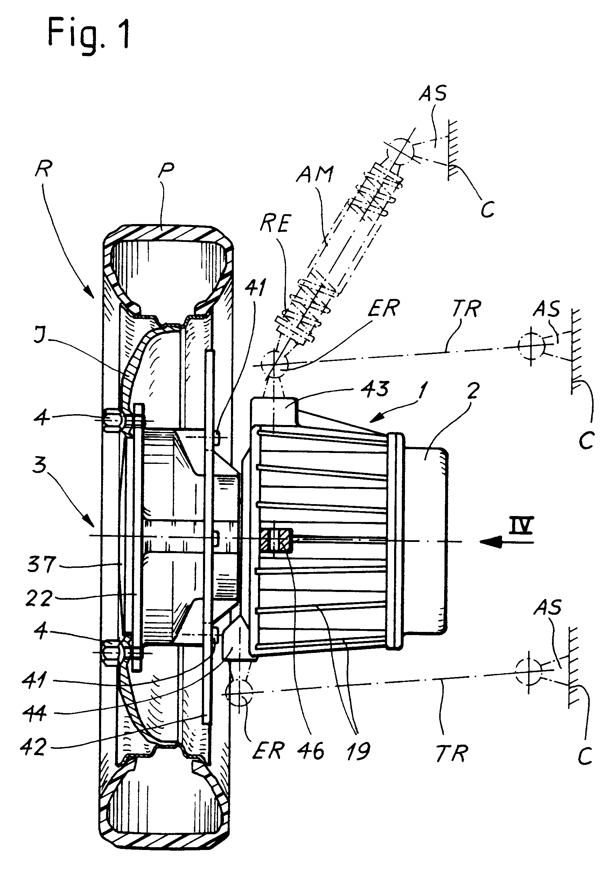

On va tout d'abord se référer à la figure 1 qui montre une vue générale partiellement en coupe verticale et schématique du mode de réalisation préféré du module de roulement moteur suivant l'invention. Il s'agit en l'occurrence d'un module avant gauche du véhicule.

Comme on peut le constater sur cette figure, le module moteur comporte une roue R , de conception classique et présentant notamment un pneumatique P et une jante J.

Le module moteur suivant l'invention est destiné à être attaché à un corps C de véhicule automobile qui est ici simplement schématisé sur la figure, au moyen d'attaches de suspension AS, le corps C pouvant être d'une conception quelconque. Cependant, il est à noter que la présente invention s'adresse plus particulièrement , bien que non exclusivement , à des véhicules automobiles de petites dimensions destinées particulièrement au transport de personnes.

De façon classique, le corps du véhicule est raccordé au module de roulement selon l'invention par des triangles de suspension TR et par un ensemble ressort RE et amortisseur AM, le tout étant de conception classique.

Il est à noter que pour un véhicule déterminé, un module de roulement suivant l'invention peut équiper les quatre roues de celui-ci, deux d'entre elles pouvant être en outre directrices, ce qui signifie que le module comporte en complément des aménagements permettant de le coupler au système de direction du véhicule, les détails de cette construction étant décrits dans la suite de la description.

En en venant maintenant à la description détaillée du module de roulement, on voit sur la figure 1 qu'il comporte un carter 1 fermé du côté intérieur par rapport au véhicule par un capot 2 et couplé à un ensemble 3 support de roue, cet ensemble étant par ailleurs boulonné, à l'aide de vis 4 à la jante J de la roue R.

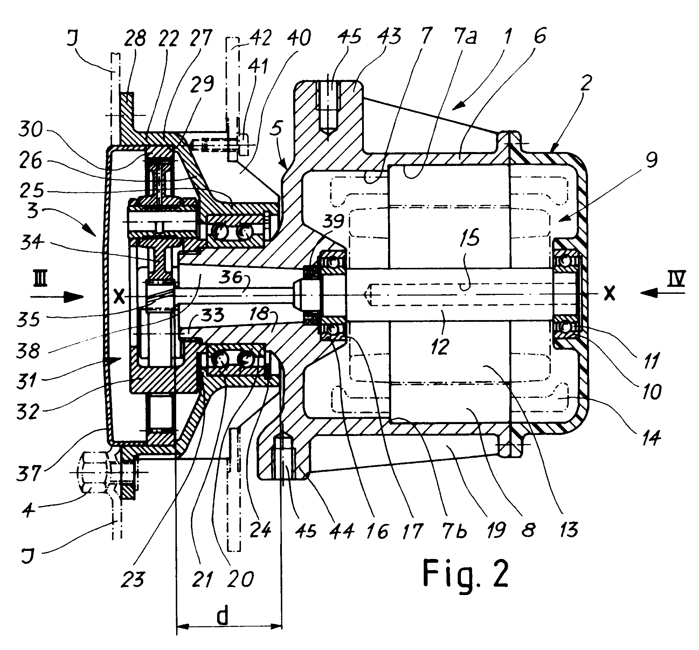

Sur la figure 2, on voit que le carter 1 comporte un flasque principal 5 positionné radialement par rapport à l'axe central X-X du module de roulement. Du côté intérieur, ce flasque est solidaire d'une partie cylindrique 6 alignée sur l'axe X-X et présentant un alésage intérieur étagé 7. La partie arrière 7a de cet alésage présente un diamètre plus grand que le reste de l'alésage de manière à définir un épaulement annulaire 7b. Contre cet épaulement 7b vient se placer un paquet de tôles 8 appartenant au stator d'un moteur électrique 9 qui, dans le présent mode de réalisation est prévu pour assurer l'entraînement du module de roulement.

Il est précisé que tout type de moteur peut être utilisé dans ce but, un moteur hydraulique étant à mentionner parmi les possibilités.

L'alésage 7 du carter 1 est obturé à l'arrière au moyen du capot 2 qui présente un chambrage 10 agencé pour loger un roulement à billes 11 dans lequel est reçue l'extrémité intérieure d'un arbre principal 12 du module de roulement. Bien entendu, cet arbre est centré sur l'axe X-X. Le capot 2 peut être une pièce moulée en matière plastique.

L'arbre 12 porte le rotor 13 du moteur électrique 9, tandis que le paquet de tôles 8 est pourvu de bobines 14, le moteur électrique 9 ainsi constitué étant de préférence du type asynchrone et destiné à être alimenté par une tension alternative à fréquence réglable permettant d'en réguler les paramètres de fonctionnement.

On notera que dans la zone où il coïncide avec le moteur électrique, l'arbre 12 est au moins partiellement évidé; par exemple il présente un trou central 15 destiné à l'alléger.

A peu près à mi-longueur, l'arbre 12 est reçu dans un autre roulement à billes 16 qui est placé dans une cavité circulaire 17 ménagée dans le flasque 5 du carter 1.

Du côté extérieur du flasque 5 , le carter 1 comporte un canon de fixation 18 centré sur l'axe X-X- et à travers lequel passe l'arbre 12.

On notera également que le carter 1 est pourvu extérieurement d'ailettes de refroidissement 19 réparties régulièrement autour de sa surface périphérique et s'étendant radialement.

Un épaulement radial 20 est ménagé extérieurement sur le canon 18 et sert de butée axiale à un double roulement à billes 21 autour duquel est monté un plateau 22 support de roue qui est positionné axialement par rapport au roulement 21 d'une part en raison d'une collerette 23 prévue sur ce plateau et d'autre part par un circlips 24 prévu du côté intérieur du roulement 21.

Le plateau support de roue 22 présente essentiellement une forme de révolution avec une partie arrière 25 de faible diamètre destinée à recevoir le roulement 21, une partie intermédiaire tronconique 26 s'étendant radialement vers l'extérieur et une partie extérieure cylindrique 27 se terminant par une bride de fixation 28 à laquelle est boulonnée la jante J de la roue au moyen des vis 4.

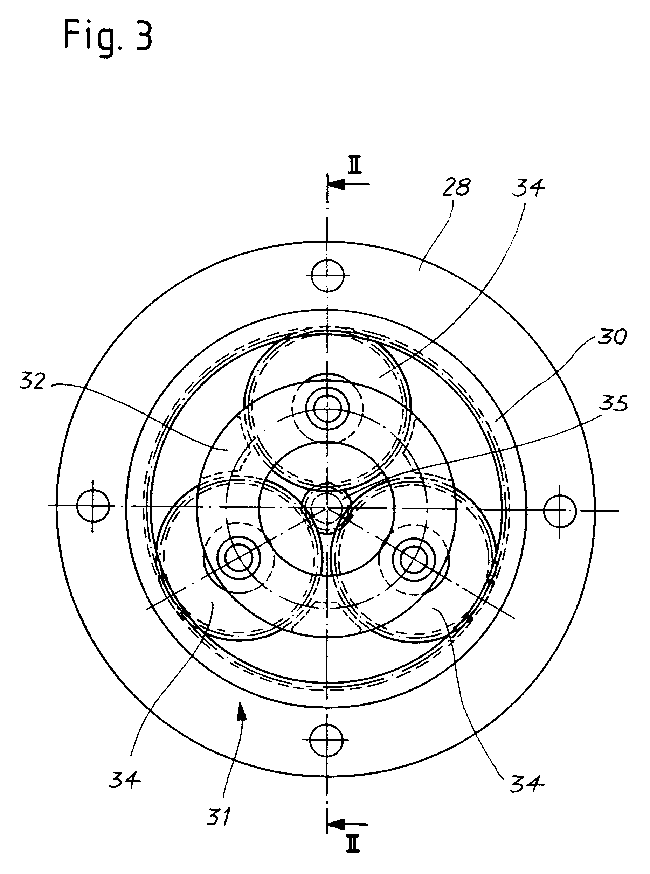

Intérieurement, la partie cylindrique 27 présente une surface annulaire de support qui est raccordée à un épaulement radial 29 contre lequel est en appui une couronne 30 appartenant à un train épicycloïdal 31 servant de transmission réductrice. Plus précisément (voir aussi la figure 3), ce train épicycloïdal comporte un porte-satellites 32 qui est vissé sur l'extrémité filetée 33 du canon 18 appartenant au carter 1, et un pignon planétaire 35 constituant l'organe d'entrée de ce train épicycloïdal. Précisons que la longueur du canon de fixation 18 est sensiblement égale à la distance d (figure 2) séparant le pignon planétaire 35 de l'extrémité libre de ladite partie arrière 25 du plateau 22.

Le porte-satellites est équipé de trois satellites 34 qui engrènent avec un pignon planétaire 35 taillé sur l'extrémité extérieure de l'arbre 12.

On remarquera que, selon une caractéristique essentielle de l'invention, le pignon planétaire 35 est raccordé à la partie arrière de l'arbre 12 par l'intermédiaire d'une portion 36 de cette arbre, faisant office d'élément de torsion.

Rappelons que pour un arbre de section constante, la flexibilité en torsion est inversement proportionnel au moment quadratique lo de la section et que :

$$I_0 = \int_s r^2\, \delta s \text{ c'est-à-dire pour un cylindre } I_0 = \frac{\pi R^4}{2}$$

où

S est la surface de la section
r est la distance séparant l'élément infini tésimal de surface $\delta s$ de l'axe de l'arbre.
R est le rayon du cylindre.

Dans des proportions prédéterminées, cet élément de torsion 36 admet une différence entre les couples auxquels sont soumis, d'une part, l'arbre 12 et, d'autre part, le pignon planétaire 35. Par exemple, si la roue R rencontre un obstacle sur la route, le pignon planétaire subira une variation de couple due au choc que subit la roue, choc qui est transmis à ce pignon par la jante J, le plateau support de roue 22 et les organes rotatifs du train épicycloïdal.

En revanche, le moteur électrique 9 continue à fournir le couple produit en fonction du réglage momentané des paramètres de fonctionnement du moteur. De ce fait, l'élément ou tige de torsion 36 se déforme autour de l'axe X-X et absorbe la différence dynamique ainsi créée entre les deux couples. La souplesse de fonctionnement est donc améliorée.

Bien entendu, la tige 36 joue le même rôle si le moteur électrique, du fait de sa commande, est amené à fonctionner comme frein électrique, ou si sa commande subit une variation brusque du fait de l'opérateur ou du conducteur du véhicule. La différence entre les deux couples peut donc être positive ou négative.

Pour fixer les idées, si le module moteur peut fournir un couple nominal de 10 Nm, la tige de torsion est dimensionnée pour admettre durant un bref laps de temps une différence de 4 Nm en positif ou en négatif entre le couple d'entrée et le couple de sortie. Dans ce cas, la portion déformable en torsion de l'arbre peut avoir une longueur de 55 mm, un diamètre de 8 mm, l'arbre étant réalisé en la nuance d'acier 42CrMo4.

Le plateau 22 est fermé par un couvercle 37 pour délimiter une cavité 38 remplie d'un lubrifiant , cette chambre étant fermée à l'arrière par un joint 39.

On voit également que le plateau 22 présente à l'arrière des pattes de fixation 40 (il peut y en avoir quatre décalées de 90°) destinées à la fixation au moyen de vis 41 d'un disque de freinage 42 entourant l'ensemble à cet endroit.

Comme il est visible sur les figures 1, 2 et 5, le carter 1 comprend deux protubérances radiales 43 et 44 à peu près diamétralement opposées dans un plan vertical, chacune de ces protubérances étant pourvue d'un trou borgne 45. Ces trous 45 dont les axes sont situés de préférence dans un plan vertical auquel appartient l'axe principal X-X, sont destinés à recevoir des embouts de rotule ER qui font partie du système de suspension du véhicule (figure 1). On voit que les protubérances 43 et 44 font partie intégrante du carter 1, étant entendu qu'elles sont de préférence venues de fonderie avec ce carter.

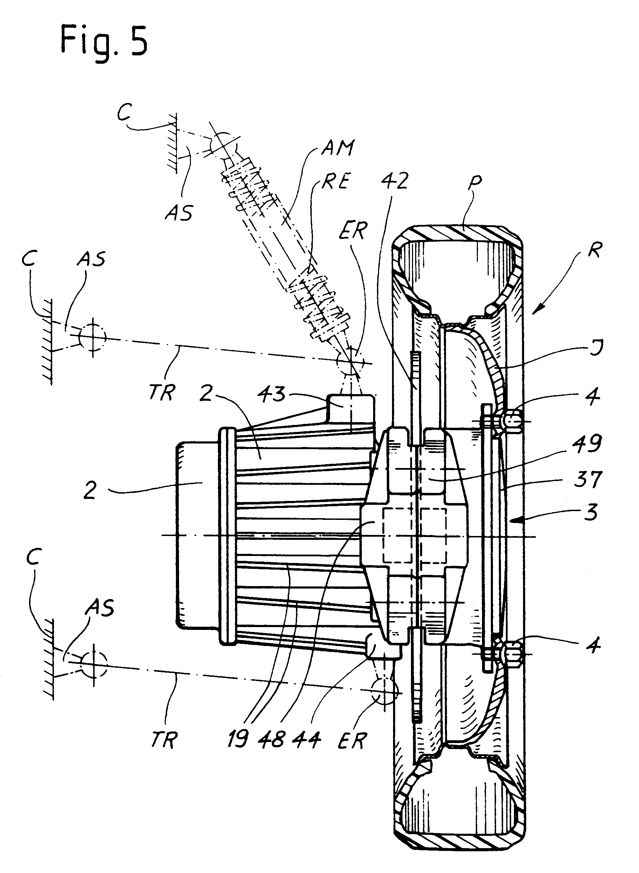

Grâce à cette construction, on utilise le carter 1 qui abrite donc le moteur d'entraînement 9 du module de roulement, comme structure de support interposée entre la roue R et le système de suspension du véhicule matérialisé sur les figures 1 et 5 de façon schématique par les organes en traits mixtes TR, AM, RE et AS. Comme par ailleurs, le carter dans son ensemble peut être réalisé en un matériau léger moulable tel que l'aluminium ou un alliage d'aluminium, voire une matière plastique, éventuellement armée de fibres de verre, l'ensemble, tout en conférant la rigidité nécessaire d'une structure portante à l'ensemble, reste compacte et léger de telle manière que cet ensemble soit compatible avec les contraintes sévères en la matière imposée à un véhicule automobile de petites dimensions et équipé d'une source d'énergie électrique autonome alimentant ses moteurs d'entraînement.

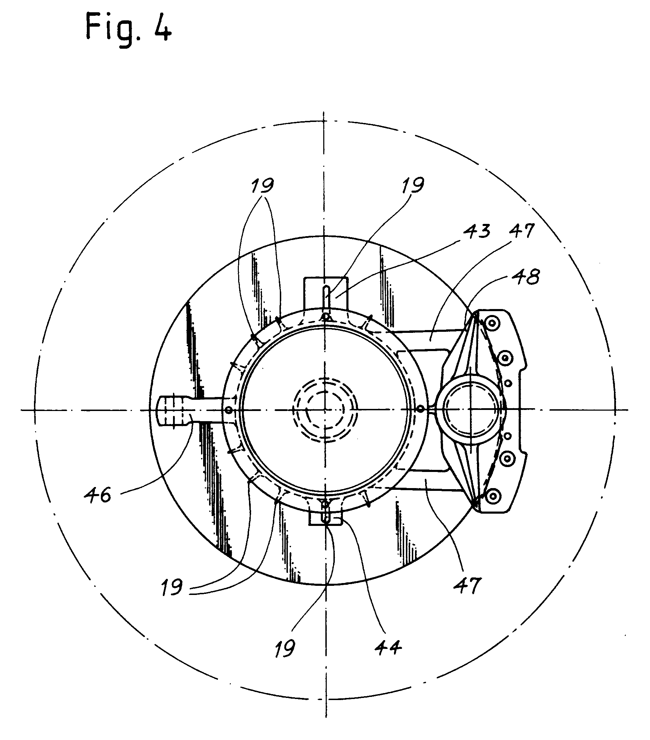

La structure que l'on vient de décrire peut être utilisée pour des roues fixes d'un véhicule. Cependant, il est possible d'en faire des modules de roulement directeurs en prévoyant, comme cela est représenté plus particulièrement sur les figures 1 et 4, une patte de connexion 46 pouvant faire partie intégrante du carter c'est-à-dire être moulée avec lui pendant une même opération de moulage.

Cette patte de connexion 46 peut être raccordée à une barre de direction (non représentée) d'une façon connue en soi.

Que ce soit un module de roulement directeur ou fixe, on peut également prévoir, comme cela résulte plus particulièrement des figures 4 et 5 qu'une partie au moins du dispositif de freinage intégré dans le module de roulement soit également partie intégrante du carter 1.

A cet effet, dans le mode de réalisation représenté, le carter 1 comporte, venues de moulage deux pattes de fixation 47 prévues par exemple à l'arrière du module de roulement vu dans le sens de la marche avant de celui-ci, ces pattes 47 portant à leur extrémité libre la moitié 48 d'un étrier servant à coopérer avec le disque de freinage 42, l'autre moitié 49 de l'étrier étant rapportée sur la moitié 48. Bien entendu, l'étrier 48, 49 est équipé de pistons et de plaquettes comme cela est classique.

On constate donc que l'ensemble qu'on vient de décrire, est léger, compact et facile à fabriquer, le montage ne nécessitant que très peu de main-d'oeuvre.

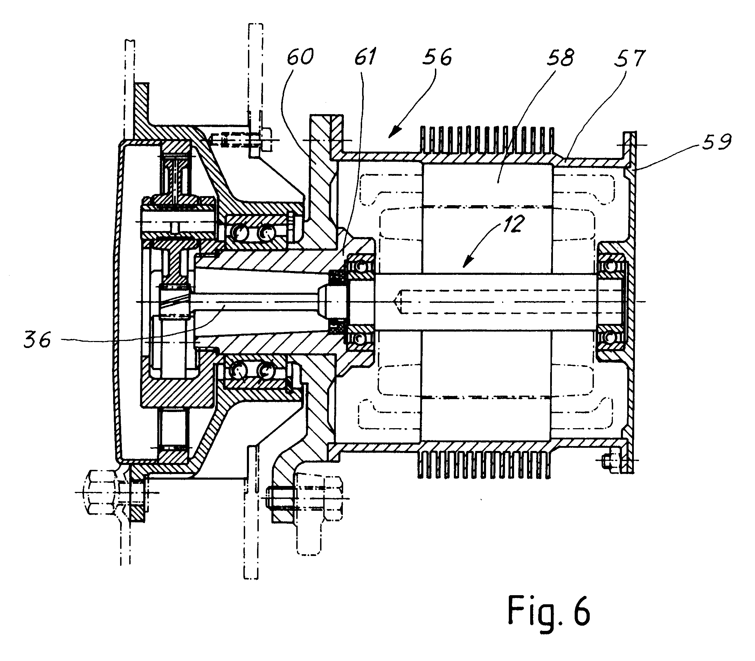

La figure 6 montre un autre mode de réalisation de l'invention dans lequel l'arbre principal 12 est identique à celui du mode de réalisation préféré de l'invention, représentée aux figure 1 à 5. La différence avec ce dernier consiste en ce que le carter 56 du module est ici réalisé en plusieurs pièces comprenant notamment une pièce cylindrique 57 support du stator 58 du moteur et un flasque d'extrémité 59 fermant cette pièce d'un côté et supportant l'arbre principal 12 à rotation. L'autre extrémité de cette pièce cylindrique est fermée par un disque radial 60 dans lequel est inséré un manchon 61. Ce dernier porte à rotation l'arbre 12 et le plateau support de la roue 22.

Le disque 60 peut être aménagé pour assurer la fixation d'éléments de suspension du véhicule au module suivant l'invention.

## Revendications

1. Module de roulement moteur comprenant un moteur (9), un carter (1) logeant ledit moteur, fermé à une extrémité par un capot (2) et partiellement obturé à l'autre extrémité par un flasque (5) en regard d'un support de roue (3) dont la partie distale (25), sensiblement cylindrique, reçoit intérieurement un roulement (21); une roue (R) montée rigidement sur ledit support de roue (3); une transmission réductrice (31) épicycloïdale en prise directe entre le moteur (9) et la roue (R), et logée dans ledit support de roue (3); un arbre principal (12) portant le rotor (13) dudit moteur (9) et le pignon planétaire (35) de ladite transmission (31); un canon de fixation (18) prolongeant ledit carter (1) du côté de la roue, ledit canon (18) étant coaxial avec ledit arbre principal (12), recevant extérieurement ledit roulement (21) et étant pourvu à son extrémité d'un filetage (33) de fixation de l'élément de la transmission réductrice fixé par rapport au carter; caractérisé

   en ce que l'arbre principal est un arbre multifonctionnel unique réalisé d'une seule pièce, le pignon planétaire (35) venant de matière avec l'arbre principal;

   en ce que l'élément de la transmission réductrice fixé par rapport au carter est le porte-satellites (32);

   en ce que l'extrémité libre de ladite partie distale (25) du support de roue (3) est pratiquement en contact avec la face extérieure dudit flasque (5), la longueur dudit canon de fixation (18) étant sensiblement égale à la distance (d) séparant ledit pignon planétaire (35) de l'extrémité libre de ladite partie arrière (25);

en ce qu'une portion (36) dudit arbre principal (12) située entre ledit pignon planétaire (35) et ledit rotor (13), à l'intérieur dudit canon de fixation (18), a une section dont le moment quadratique par rapport à l'axe dudit arbre, est au moins 10 fois plus petit que le moment quadratique de la section de l'arbre dans les autres parties de celui-ci.

2. Module de roulement moteur selon la revendication 1, caractérisé en ce que ledit arbre principal (12) est au moins partiellement creux.

3. Module de roulement moteur selon la revendication 1, caractérisé en ce que ledit canon de fixation (18) vient de matière avec au moins une autre partie du carter (1).

**Claims**

1. Wheel drive module comprising a motor (9), a casing (1) housing said motor, closed at an end by a cap (2) and partially closed at the other end by a flange (5) facing a wheel support (3), the substantially cylindrical rear part (25) of which receives inside a bearing (21); a wheel (R) rigidly mounted on said wheel support (3); a planetary gear reduction transmission (31) engaging directly between the motor (9) and the wheel (R) and being housed in said wheel support (3); a main shaft (12) bearing the rotor (13) of said motor (9) and the planetary pinion (35) of said transmission (31); a fixing shank (18) as an extension of said casing (1) towards the wheel, said shank (18) being centered on the line of the main shaft (12), externally receiving said bearing (21) and being provided at its end with a threaded fixation (33) to the reduction transmission element secured in relation to the casing, characterized

in that the main shaft is an integral multifunctional one piece shaft, the planetary pinion (35) being integral with the main shaft;

in that the reduction transmission element secured in relation to the casing is the satellite holder (32);

in that the free end of said rear part (25) of the wheel support (3) is substantially in contact with external part of said flange (5), the length of said fixing shank (18) being substantially equal to the distance (d) between said planetary pinion (35) and the free end of said rear part (25);

in that a portion (36) of said main shaft (12) situated between said planetary pinion (35) and said rotor (13) inside said fixing shank (18) has a cross-section, the second moment of area of which, referred to the axis of said shaft, is at least 10 times smaller than the second moment of area of the cross-section of the other parts of said shaft in other parts ofthe latter.

2. Wheel drive module according to claim 1, characterized in that said main shaft (12) is at least partially hollow.

3. Wheel drive module according to claim 1, characterized in that said fixing shank (18) is integral with at least one other part of said casing (1).

**Patentansprüche**

1. Motor-Lager-Modul, umfassend einen Motor (9), ein den Motor enthaltendes Gehäuse (1), das an einem Ende durch eine Kappe (2) und am anderen Ende teilweise durch einen Flansch (5) gegenüber einem Radsupport (3) abgesperrt ist, dessen distale Partie (25), im wesentlichen zylindrisch, im Inneren ein Wälzlager (21) aufnimmt; ein starr an dem Radsupport (3) montiertes Rad (R); ein epizykloides Untersetzungsgetriebe (31) in direktem Eingriff mit dem Motor (9) und dem Rad (R) und in dem Radsupport (3) untergebracht; eine Hauptwelle (12), die den Rotor (13) des Motors (9) und das Planetenritzel (35) des Getriebes (31) trägt; ein das Gehäuse (1) radseitig verlängertes Befestigungsrohr (18), das koaxial mit der Hauptwelle (12) ist, außen das Wälzlager (21) aufnimmt und an seinem Ende mit einem Bolzengewinde (33) für die Befestigung des Elements des Untersetzungsgetriebes versehen ist, das relativ zu dem Gehäuse ortsfest ist; dadurch gekennzeichnet,

daß die Hauptwelle eine einzige einstückig hergestellte Mehrfunktionswelle ist, wobei das Planetenritzel (35) einstückig mit der Hauptwelle ist;

daß das relativ zum Gehäuse festliegende Element des Untersetzungsgetriebes der Satellitenträger (32) ist;

daß das freie Ende der distalen Partie (25) des Radsupports (3) praktisch in Kontakt ist mit der Außenseite des Flansches (5), wobei die Länge des Befestigungsrohres (18) im wesentlichen gleich der Distanz (d) ist zwischen dem Planetenritzel (35) des freien Endes der hinteren Partie (25);

daß ein Abschnitt (36) der Hauptwelle (12), der sich zwischen dem Planetenritzel (35) und dem Rotor (13) im Inneren des Befestigungsrohres (18) befindet, einen Querschnitt aufweist, dessen quadratisches Moment relativ zur Achse der Welle mindestens 10mal kleiner ist als das quadratische Moment des Querschnitts der Welle in den anderen Partien derselben.

2. Motor-Lager-Modul nach Anspruch 1, dadurch gekennzeichnet, daß die Hauptwelle (12) mindestens teilweise hohl ist.

3. Motor-Lager-Modul nach Anspruch 1, dadurch gekennzeichnet, daß das Befestigungsrohr (18) einstückig mit zumindest einer anderen Partie des Gehäuses (1) ist.

# Fig. 1

EP 0 525 663 B1

Fig. 2

9

Fig. 3

Fig. 4

# Fig. 5

Fig. 6